# EUROPEAN PATENT SPECIFICATION

(11) **EP 2 349 840 B1**
(45) Date of publication and mention of the grant of the patent: **08.01.2014**
(21) Application number: 08876469.1
(22) Date of filing: 19.11.2008
(51) Int. Cl.: B64D 39/00

(54) **CONTROLLING A TELESCOPING REFUELING BOOM**
STEUERUNG VON EINEM TELESKOPISCHEM LUFTBETANKUNGSROHR
COMMANDE D'UNE PERCHE DE RAVITAILLEMENT TÉLESCOPIQUE

(43) Date of publication of application: 03.08.2011
(60) Divisional application: 13188774.7
(73) Proprietor: The Boeing Company, Chicago, IL 60606-2016 (US)
(72) Inventor: SPEER, Thomas Edward, Des Moines Washington 98198 (US); HATCHER, Justin Cleve, Renton Washington 98058 (US); MUSGRAVE, Jeffrey L., Renton Washington 98058 (US); ANDERSON, Tyler Martin, Kent Washington 98042 (US)
(74) Representative: Boult Wade Tennant
(86) International application number: PCT/US2008/084056
(87) International publication number: WO 2010/059155

(56) References cited:
- EP-A- 2 014 552
- US-A1- 2003 209 633
- US-A1- 2003 218 097
- US-A1- 2006 108 475

## Description

### BACKGROUND INFORMATION

### Field:

The present disclosure relates generally to aircraft and, in particular, to refueling aircraft. Still more particularly, the present disclosure relates to a method, apparatus, and computer usable program code for controlling a refueling boom.

### Background:

Aerial refueling may be a process of transferring fuel from one aircraft to another aircraft. The aircraft from which the fuel originates may be referred to as a tanker, while the other aircraft receiving the fuel may be referred to as a receiver. This type of process may be applied to various types of aircraft, including, for example, without limitation, fixed wing aircraft and/or helicopters.

One common approach for refueling may involve a boom and receptacle system, like that described in US 2003/0209633. With a boom, a fixed tube and a telescoping tube may be present on the tanker aircraft. These tubes may also be referred to as a refueling boom or telescoping refueling boom. The refueling boom may be attached to the rear of the tanker aircraft and may be maneuverable allowing movement along an x-axis and a y-axis relative to the tanker. An operator may extend and/or position the refueling boom for insertion into a receptacle on the receiving aircraft to transfer fuel to the receiving aircraft.

Tanker aircraft also may have auxiliary power units for various functions on the tanker aircraft. The auxiliary power unit has an exhaust plume that may intersect with the refueling boom when the refueling boom is elevated and fully extended towards a horizontal position with respect to the tanker. When stowing the refueling boom, it may be desirable to retract the refueling boom such that the refueling boom does not interfere with and/or contact exhaust from an auxiliary power unit in the tanker aircraft. Also, operation of the auxiliary power unit, while the refueling boom is extended beyond a certain distance within some angle of elevation with respect to the tanker, may be undesirable.

Currently, a refueling boom operator may operate the refueling boom to retract the refueling boom when stowing the refueling boom to avoid interference with exhaust from an auxiliary power unit. This type of process requires an operator to remember to retract the refueling boom before elevating the refueling boom to stow the refueling boom.

Other solutions may include turning off the auxiliary power unit, redirecting exhaust, and/or relocating the auxiliary power unit to avoid conflicts with the refueling boom. Redesigning and/or moving the auxiliary power unit may be time consuming and expensive.

Further, a refueling boom operator may control the ruddevators for a refueling boom to control the pitch and yaw of the refueling boom. The flexibility of the refueling boom may add a challenge to positioning the refueling boom when a refueling boom operator manipulates a control stick to operate the refueling boom. Movement of the ruddevators may be performed in concert or together since the refueling boom uses a pitch and yaw pivot, while the ruddevators may be in a "V" configuration. Converting from the motion of the refueling boom to directions controlled by the ruddevators in a manner that allows for effective control in moving the refueling boom may be difficult.

Existing solutions may use a mechanical pantograph that sums the positive position feedback and control stick inputs to combine the feedback and the mixing of the elevation and azimuth axes into the ruddevator deflections. Also, in some aircraft, the control surfaces may be in the same direction as the axes of motion. This type of solution for positioning a refueling boom may be tied to a specific configuration and may not be easily adapted to new configurations.

Therefore, it would be desirable to have a method, apparatus, and computer program code that overcomes one or more of the issues described above, as well as other possible issues.

### SUMMARY

The present invention provides a method for controlling a refueling boom according to claim 1, and an apparatus according to clam 11.

A length of the refueling boom is sensed to form an identified length for the refueling boom. A determination is made as to whether the identified length of the refueling boom is extended more than an allowed length for the refueling boom. A command to move the refueling boom within the allowed length for the refueling boom is generated if the refueling boom is extended more than the allowed length.

An apparatus and a data processing system capable of executing the process are provided.

In yet another advantageous embodiment, a method may be present for controlling a refueling boom for an aircraft. A length of the refueling boom may be sensed to form an identified length for the refueling boom. An allowed length may be identified from an elevation of the refueling boom. A determination may be made as to whether the identified length of the refueling boom is extended more than the allowed length for the refueling boom using a table comprising a number of elevations and a number of associated allowed lengths. An automatic retract rate command may be generated to move the refueling boom within the allowed length for the refueling boom if the refueling boom is extended more than the allowed length. The generation of the automatic retract rate command may be ceased when the refueling boom is fully retracted. The extending of the refueling boom may be prevented when the refueling boom is stowed against the aircraft. A determination may be made as to whether the identified length of the refueling boom is extended more than the allowed length for the refueling boom using a limiter. The extending of the refueling boom may be prevented when the elevation of the refueling boom is within a threshold. The refueling boom may be moved between a stowed position and a deployed position without requiring operator input using a state machine having a plurality of states to control the refueling boom based on an elevation of the refueling boom.

The extending of the refueling boom may be prevented when the refueling boom is stowed against the aircraft. A determination may be made as to whether the identified length of the refueling boom is extended more than the allowed length for the refueling boom using a limiter. The extending of the refueling boom may be prevented when the elevation of the refueling boom is within a threshold. The refueling boom may be moved between a stowed position and a deployed position without requiring operator input using a state machine having a plurality of states to control the refueling boom based on an elevation of the refueling boom, such that the refueling boom remains out of the exhaust of the auxiliary power unit.

An apparatus for controlling movement of a refueling boom for an aircraft may comprise a sensor, and a data processing system. The automatic retract command control law is capable of receiving a length of the refueling boom to form an identified length of the refueling boom. The automatic retract command control law is capable of determining whether the identified length of the refueling boom is extended more than an allowed length for the refueling boom. The automatic retract command control law is also capable of generating a command to move the refueling boom within the allowed length for the refueling boom if the refueling boom is extended more than the allowed length. The automatic deployment stowage and deployment control law may be capable of moving the refueling boom between a stowed position and a deployed position without requiring operator input using a state machine having a plurality of states based on an elevation of the refueling boom. The sensor may be capable of sensing the length of the refueling boom to form the identified length of the refueling boom. The data processing system may be capable of executing the automatic retract command control law and the automatic deployment stowage and deployment control law.

A computer program product is present for controlling a refueling boom. The computer program product comprises program code stored on a computer recordable storage medium. Program code is present for sensing a length of the refueling boom to form an identified length for the refueling boom. Program code is present for determining whether the identified length of the refueling boom is extended more than an allowed length for the refueling boom. Program code is present for generating a command to move the refueling boom within the allowed length for the refueling boom if the refueling boom is extended more than the allowed length.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives and advantages thereof, will best be understood by reference to the following detailed description of an advantageous embodiment of the present disclosure when read in conjunction with the accompanying drawings, wherein:
**Figure 1** is a diagram of an aircraft in which an advantageous embodiment may be implemented;
**Figure 2** is a diagram of a data processing system in accordance with an illustrative embodiment;
**Figure 3** is a diagram of a refueling environment in accordance with an advantageous embodiment;
**Figure 4** is a diagram of one implementation for a refueling environment in accordance with an advantageous embodiment;
**Figure 5** is a more detailed illustration of a refueling boom in accordance with an advantageous embodiment;
**Figure 6** is a diagram illustrating command flow in accordance with an advantageous embodiment;
**Figure 7** is a diagram illustrating an automatic retract command law in accordance with an advantageous embodiment;
**Figure 8** is a diagram of a table in accordance with an advantageous embodiment;
**Figure 9** is a flowchart of a process for controlling a refueling boom in accordance with an advantageous embodiment;
**Figure 10** is flowchart of a process for automatically retracting a telescoping tube for a refueling boom in accordance with an advantageous embodiment;
**Figure 11** is a flowchart for a process for controlling the extending of a refueling boom depicted in accordance with an advantageous embodiment; and
**Figure 12** is a diagram of a state machine for automatically operating a refueling boom in accordance with advantageous embodiments.

### DETAILED DESCRIPTION

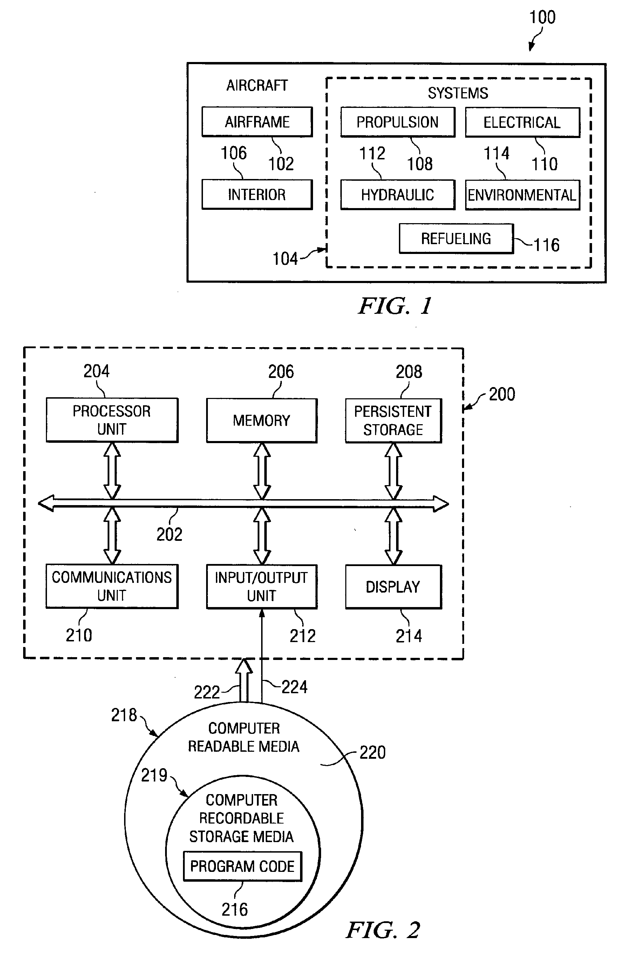

Referring more particularly to the drawings, embodiments of the disclosure may be described in the context of an aircraft, such as aircraft **100** in **Figure 1****.**

With reference now to **Figure 1****,** a diagram of an aircraft is depicted in which an advantageous embodiment may be implemented. In this example, aircraft **100** may include airframe **102** with a plurality of systems **104** and interior **106.** Examples of systems **104** include one or more of propulsion system **108,** electrical system **110,** hydraulic system **112,** environmental system **114,** and refueling system **116.** Any number of other systems may be included. Different advantageous embodiments may be implemented within refueling system **116** in these depicted examples. Although an aerospace example is shown, different advantageous embodiments may be applied to other industries, such as the automotive industry.

Turning now to **Figure 2****,** a diagram of a data processing system is depicted in accordance with an illustrative embodiment. Data processing system **200** is an example of the data processing system that may be located within aircraft **100** in **Figure 1****.** For example, data processing system **200** may be part of electrical system **110** and/or refueling system **116** in **Figure 1****.** Data processing system **200** may implement different processes for managing movement of a refueling boom. In this illustrative example, data processing system **200** includes communications fabric **202,** which provides communications between processor unit **204,** memory **206,** persistent storage **208,** communications unit **210,** input/output (I/O) unit **212,** and display **214.**

Processor unit **204** serves to execute instructions for software that may be loaded into memory **206.** Processor unit **204** may be a set of one or more processors or may be a multi-processor core, depending on the particular implementation. Further, processor unit **204** may be implemented using one or more heterogeneous processor systems in which a main processor is present with secondary processors on a single chip. As another illustrative example, processor unit **204** may be a symmetric multi-processor system containing multiple processors of the same type.

Memory **206** and persistent storage **208** are examples of storage devices. A storage device is any piece of hardware that is capable of storing information either on a temporary basis and/or a permanent basis. Memory **206,** in these examples, may be, for example, a random access memory or any other suitable volatile or non-volatile storage device.

Persistent storage **208** may take various forms depending on the particular implementation. For example, persistent storage **208** may contain one or more components or devices. For example, persistent storage **208** may be a hard drive, a flash memory, a rewritable optical disk, a rewritable magnetic tape, or some combination of the above. The media used by persistent storage **208** also may be removable. For example, a removable hard drive may be used for persistent storage **208.**

Communications unit **210,** in these examples, provides for communications with other data processing systems or devices. In these examples, communications unit **210** is a network interface card. Communications unit **210** may provide communications through the use of either or both physical and wireless communications links.

Input/output unit **212** allows for input and output of data with other devices that may be connected to data processing system **200.** For example, input/output unit **212** may provide a connection for user input through a keyboard and mouse. Further, input/output unit **212** may send output to a printer. Display **214** provides a mechanism to display information to a user.

Instructions for the operating system and applications or programs are located on persistent storage **208.** These instructions may be loaded into memory **206** for execution by processor unit **204.** The processes of the different embodiments may be performed by processor unit **204** using computer implemented instructions, which may be located in a memory, such as memory **206.** These instructions are referred to as program code, computer usable program code, or computer readable program code that may be read and executed by a processor in processor unit **204.** The program code in the different embodiments may be embodied on different physical or tangible computer readable media, such as memory **206** or persistent storage **208.**

Program code **216** is located in a functional form on computer readable media **218** that is selectively removable and may be loaded onto or transferred to data processing system **200** for execution by processor unit **204.** Program code **216** and computer readable media **218** form computer program product **220** in these examples. In one example, computer readable media **218** may be in a tangible form, such as, for example, an optical or magnetic disc that is inserted or placed into a drive or other device that is part of persistent storage **208** for transfer onto a storage device, such as a hard drive that is part of persistent storage **208.**

In a tangible form, computer readable media **218** also may take the form of a persistent storage, such as a hard drive, a thumb drive, or a flash memory that is connected to data processing system **200.** The tangible form of computer readable media **218** may be computer recordable storage media **219.** In some instances, computer readable media **218** may not be removable.

Alternatively, program code **216** may be transferred to data processing system **200** from computer readable media **218** through communications link **222** to communications unit **210** and/or through connection **224** to input/output unit **212.** Communications link **222** and/or connection **224** may be physical or wireless in the illustrative examples. Computer readable media **218** also may take the form of non-tangible media, such as communications links or wireless transmissions containing program code **216.**

In some illustrative embodiments, program code **216** may be downloaded over a network to persistent storage **208** from another device or data processing system for use within data processing system **200.** For instance, program code stored in a computer readable storage medium in a server data processing system may be downloaded over a network from the server to data processing system **200.** The data processing system providing program code **216** may be a server computer, a client computer, or some other device capable of storing and transmitting program code **216.**

The different components illustrated for data processing system **200** are not meant to provide architectural limitations to the manner in which different embodiments may be implemented. The different illustrative embodiments may be implemented in a data processing system including components in addition to or in place of those illustrated for data processing system **200.**

Other components shown in **Figure 2** can be varied from the illustrative examples shown. The different embodiments may be implemented using any hardware device or system capable of executing program code. As one example, the data processing system may include organic components integrated with inorganic components and/or may be comprised entirely of organic components excluding a human being. For example, a storage device may be comprised of an organic semiconductor.

As another example, a storage device in data processing system **200** may be any hardware apparatus that may store data. Memory **206,** persistent storage **208** and computer readable media **218** may be examples of storage devices in a tangible form.

In another example, a bus system may be used to implement communications fabric **202** and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory **206** or a cache such as found in an interface and memory controller hub that may be present in communications fabric **202.**

The different advantageous embodiments recognize that currently available mechanisms for stowing a refueling boom may cause a portion of the refueling boom to enter an exhaust stream from an auxiliary power unit. The different advantageous embodiments recognize that although an operator of a refueling boom may retract the refueling boom while the refueling boom is being elevated upwards, the operator may not correctly judge how far to retract the refueling boom. The different advantageous embodiments also recognize that an operator may inadvertently extend the refueling boom into the exhaust trail.

The different advantageous embodiments also recognize that having an operator deploy or stow a refueling boom during refueling operations may increase the workload for the operator. Further, operator errors also may damage a refueling boom.

Thus, the different advantageous embodiments provide a method, apparatus, and computer program code for controlling a refueling boom. A length of the refueling boom is sensed to form an identified length for the refueling boom. A determination is made as to whether the identified length of the refueling boom is extended more than the allowed length for the refueling boom. A command may be generated to move the refueling boom within the allowed length if the refueling boom is extended more than allowed.

The different advantageous embodiments also provide a method, apparatus, and computer program code for automatically deploying and/or stowing a refueling boom. In different advantageous embodiments, a refueling boom may be deployed and/or stowed using a process that automatically performs the operations based on detecting a current location of the refueling boom. In particular, the different advantageous embodiments may move the refueling boom between a stowed position and a deployed position without requiring operator input. This movement of the refueling boom between these positions may occur using a state machine having a plurality of states to control the refueling boom based on the location of the refueling boom.

Further, in the different advantageous embodiments, a bias may be added to the control laws to lift the refueling boom upwards for stowing and/or lift the boom off the latch for deployment. These types of biases may allow for simultaneous input from an operator to stop and/or modify deployment and/or stowage of the refueling boom in some advantageous embodiments.

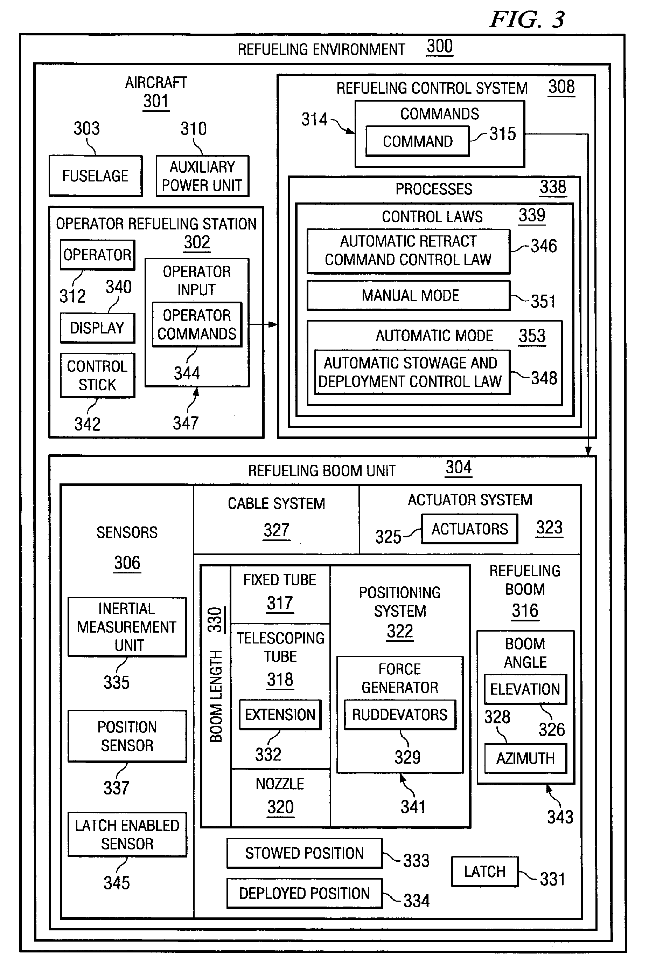

With reference now to **Figure 3****,** a diagram of a refueling environment is depicted in accordance with an advantageous embodiment. In this example, refueling environment **300** may be implemented using a portion or all of aircraft **100** in **Figure 1****.**

Refueling environment **300** may include and involve aircraft **301,** which may include fuselage **303,** operator refueling station **302,** refueling boom unit **304,** sensors **306,** refueling control system **308,** auxiliary power unit **310,** and other suitable components. In these illustrative examples, operator refueling station **302,** refueling boom unit **304,** and refueling control system **308** may be part of refueling system **116** in **Figure 1****.** The different components may be implemented using one or more data processing systems such as, for example, data processing system **200** in **Figure 2****.**

Operator refueling station **302** provides a location for operator **312** to control refueling boom unit **304.** Operator refueling station **302** sends operator input **347** to refueling control system **308.** In turn, refueling control system **308** generates commands **314,** which are sent to refueling boom unit **304** to control refueling boom **316.** For example, command **315** within commands **314** may move refueling boom **316.**

Refueling boom **316** may have fixed tube **317,** telescoping tube **318,** nozzle **320,** and positioning system **322.** In this illustrative example, positioning system **322** may be a number of force generators. A number of items, as used herein, refers to one or more items. For example, a number of force generators is one or more force generators. In this particular example, positioning system **322** may take the form of force generator **341.** In these illustrative examples, force generator **341** may take the form of ruddevators **329.** Of course, in other advantageous embodiments, force generator **341** may take the form of other force generators such as, for example, without limitation, control surfaces, other aerodynamic force generators, and/or some other suitable force generator. Ruddevators **329** may be arranged in a "V" shape on telescoping tube **318** in these examples.

Actuator system **323** may move refueling boom **316** with respect to aircraft **301** in which refueling boom unit **304** is located. In these examples, actuator system **323** may contain actuators **325.** Refueling boom **316** may move to change boom angle **343** and boom length **330.** Boom angle **343** may represent a combination of both elevation **326** and azimuth **328.** Elevation **326** also may be referred to as pitch, while azimuth **328** also may be referred to as yaw. Actuators **325** may control ruddevators **329** in positioning system **322** to change boom angle **343** of refueling boom **316.** Further, cable system **327** and/or actuator system **323** may move refueling boom **316** between stowed position **333** and deployed position **334** to change boom angle **343.** These two positions and positions between stowed position **333** and deployed position **334** may be controlled using cable system **327** and/or actuator system **323.**

In these illustrative examples, boom length **330** may be the length of fixed tube **317** plus the length of telescoping tube **318** and nozzle **320.** Further, cable system **327** may be activated to change boom length **330** of refueling boom **316.** In these examples, cable system **327** may change boom length **330** of telescoping tube **318** with respect to changes in elevation **326.** Latch **331** may be used to hold refueling boom **316.** In these illustrative examples, sensors **306** may include latch enabled sensor **345,** which may indicate when refueling boom **316** is against fuselage **303** and latch **331** may be operated safely.

Telescoping tube **318** may move with respect to fixed tube **317** to provide extension **332** for telescoping tube **318** in refueling boom **316.** Extension **332** for telescoping tube **318** may be controlled by actuators **325** within actuator system **323** in these illustrative examples. Extension **332** may be used to change boom length **330** by retracting extension **332** to reduce boom length **330** or extending extension **332** to increase boom length **330.**

Boom length **330** may be identified using sensors **306.** Sensors **306** may include, for example, without limitation, inertial measurement unit **335, a** position sensor **337,** and other suitable sensors. Inertial measurement unit **335** may identify accelerations and rates in three dimensions for refueling boom **316.** Position sensor **337** may be used to identify elevation **326** and azimuth **328** of refueling boom **316.** Further, position sensor **337** also may be used to identify the length of extension **332** of refueling boom **316.** Position sensor **337** may be implemented using a position sensor in the form of, for example, without limitation, a potentiometer or some other suitable position sensor. Of course, in other advantageous embodiments, one or more position sensors in addition to position sensor **337** may be used for sensors **306.**

In these examples, processes **338** may execute on refueling control system **308** to control refueling boom unit **304.** Control laws **339** are examples of processes **338** that may execute on refueling control system **308.** Refueling control system **308** may send information back to operator refueling station **302** for display on display **340** in operator refueling station **302.** Operator refueling station **302** also may include control stick **342** to generate operator input **347.** Operator input **347** may include operator commands **344,** which are sent to refueling control system **308** for processing.

Refueling control system **308** may process operator commands **344** using control laws **339** to generate commands **314.** Commands **314** may be modifications and/or limits to operator commands **344** generated at operator refueling station **302.**

Control laws **339** may control refueling boom unit **304** in either manual mode **351** or automatic mode **353.** In these examples, operator **312** may select between manual mode **351** and automatic mode **353** for control laws **339.** Control laws **339** may move refueling boom **316** using a control law such as, for example, without limitation, automatic retract command control law **346.** Automatic retract command control law **346** may be used in either manual mode **351** or automatic mode **353.** Control laws **339** may control the stowage and deployment of refueling boom unit **304** in automatic mode **353** using a control law such as, for example, without limitation, automatic stowage and deployment control law **348.**

Automatic retract command control law **346** may identify a length of refueling boom **316** and determine whether the identified length of refueling boom **316** is extended more than the allowed length for refueling boom **316.** Automatic retract command control law **346** may generate a command to move refueling boom **316** within the allowed length for refueling boom **316** if refueling boom **316** is extended more than the allowed length. Further, automatic retract command control law **346** may prevent extension of refueling boom **316** when refueling boom **316** is in stowed position **333.**

Automatic stowage and deployment control law **348** automatically deploys and/or stows refueling boom **316** without requiring operator input such as, for example, operator commands **344.** In other words, operator input may not be required once the process has begun. However, an operator may have to initiate a request to stow or deploy before the process has begun.

In other words, automatic stowage and deployment control law **348** may generate commands **314** to move refueling boom **316** between stowed position **333** and deployed position **334** automatically without requiring operator input to control the movement. Operator input may only be needed to initiate a change between these positions. The movement between stowed position **333** and deployed position **334** may avoid an intersection between refueling boom **316** and auxiliary power unit **310.**

The illustration of refueling environment **300** is not meant to imply physical or architectural limitations to the manner in which different refueling environments may be implemented. For example, other components in addition to or in place of the ones illustrated may be used. Also, in some advantageous embodiments, fewer components than those illustrated for refueling environment **300** may be used.

As one example, in some advantageous embodiments, operator refueling station **302** and refueling control system **308** may be integrated as a single component or system. In yet other advantageous embodiments, a number of additional refueling boom units may be deployed in addition to refueling boom unit **304.**

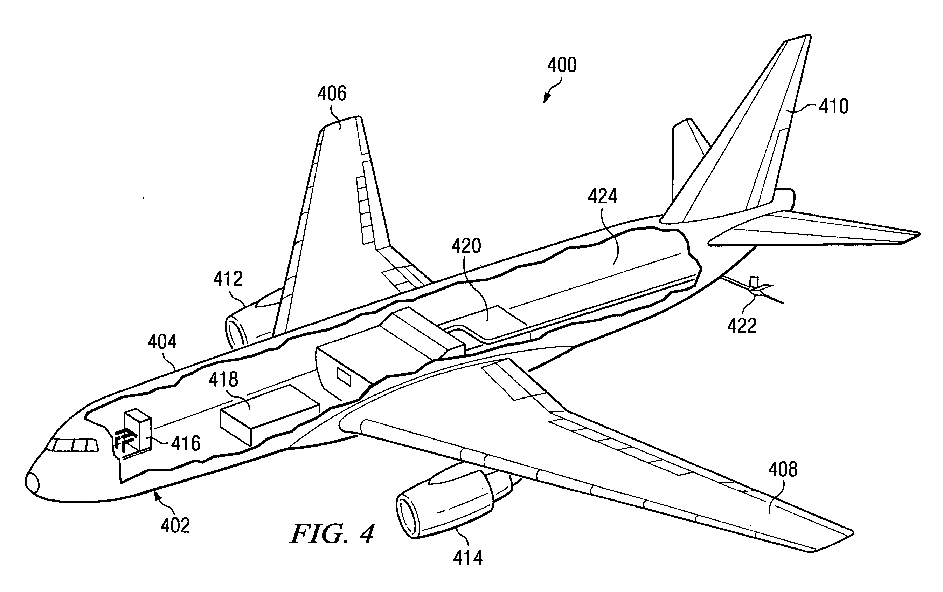

With reference now to **Figure 4****,** a diagram of one implementation for a refueling environment is depicted in accordance with an advantageous embodiment. In this example, refueling environment **400** is an example of one implementation for refueling environment **300** in **Figure 3****.**

In this illustrative example, aircraft **402** is shown in an exposed view. Aircraft **402** may have fuselage **404,** wing **406,** wing **408,** tail **410,** engine **412,** and engine **414.** In this example, aircraft **402** may contain operator refueling station **416,** auxiliary fuel tank **418,** auxiliary fuel tank **420,** and refueling boom **422.** In the different advantageous embodiments, an operator at operator refueling station **416** may control refueling boom **422** to perform refueling operations.

Refueling control system **424** may generate appropriate commands to refueling boom **422** in response to operator commands generated by an operator at operator refueling station **416.** The different operations that refueling control system **424** may command include, for example, without limitation, automatically retracting refueling boom **422,** controlling the length of refueling boom **422,** and/or automatically deploying and/or stowing refueling boom **422.**

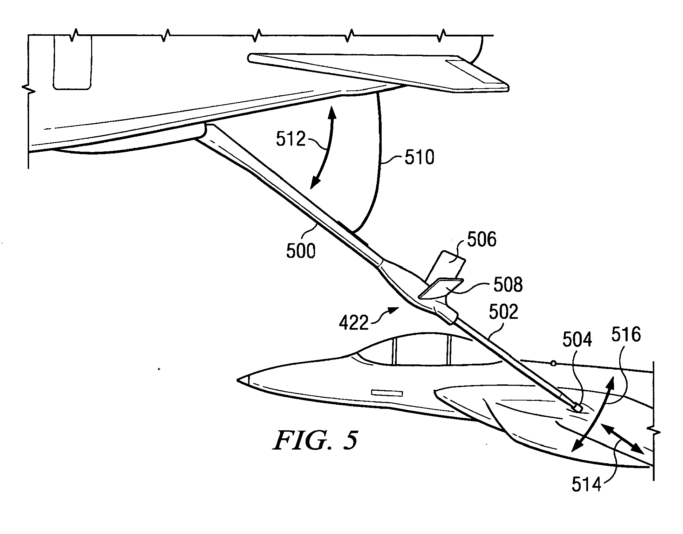

With reference now to **Figure 5****,** a more detailed illustration of a refueling boom is depicted in accordance with an advantageous embodiment. In this illustrative example, a more detailed view of refueling boom **422** in **Figure 4** is illustrated.

Refueling boom **422** may include fixed tube **500,** telescoping tube **502,** nozzle **504,** ruddevator **506,** ruddevator **508,** and hoist cable **510.** Fixed tube **500** may move in elevation as indicated by arrow **512** under the control of hoist cable **510.** Hoist cable **510** may be one example of a part within a cable system, such as, for example, cable system **327** in **Figure 3****,** used to deploy and/or stow refueling boom **422.**

Telescoping tube **502** may extend or retract along the direction of arrow **514.** Refueling boom **422** also may move in an azimuth direction as indicated by arrow **516.** The movement of refueling boom **422** in elevation along the direction of arrow **512** and along the azimuth direction as indicated by arrow **516** may be controlled using ruddevators **506** and **508.** In these examples, ruddevators **506** and **508** are examples of ruddevators **329** for positioning system **322** in **Figure 3****.** Ruddevators **506** and **508** are configured in a "V" configuration in these depicted examples.

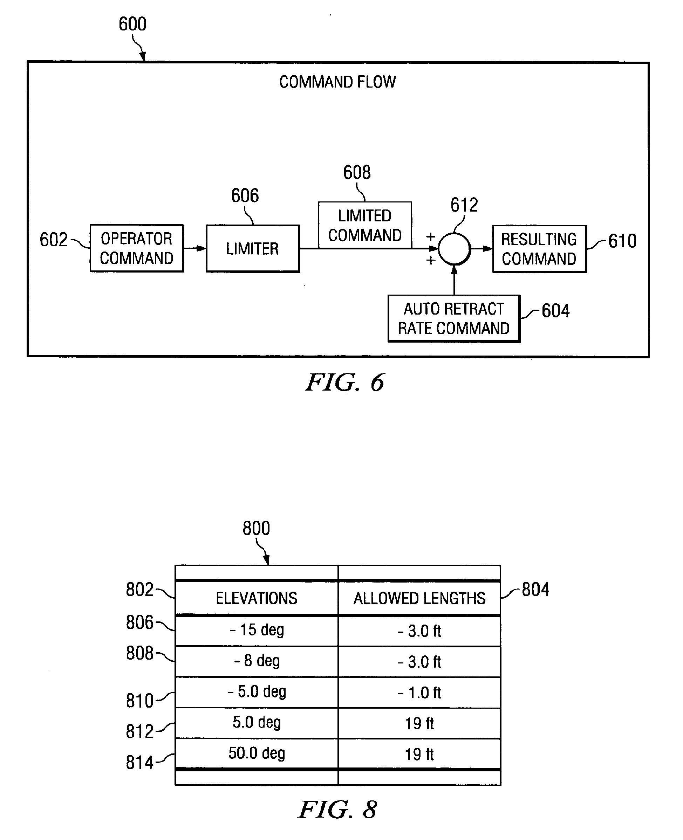

With reference now to **Figure 6****,** a diagram illustrating command flow is depicted in accordance with an advantageous embodiment. Command flow **600** is an example of a flow of commands that may occur within refueling environment **300** in **Figure 3****.** In this illustrative example, operator command **602** may be an example of an operator command in operator commands **344** in **Figure 3****,** which may be generated using control stick **342** in **Figure 3****.**

Operator command **602** in these examples may be, for example, without limitation, a command to extend and/or retract refueling boom **316** in **Figure 3****.** Auto retract rate command **604** is an example of a command that may be generated using control laws **339** in **Figure 3****.** Limiter **606** may generate limited command **608.** Resulting command **610** may be an example of a command within commands **314** in **Figure 3** that may be generated by control laws **339** to control refueling boom **316** in **Figure 3****.**

In this example, resulting command **610** may be a modification of limited command **608** obtained by summing limited command **608** with auto retract rate command **604** at summing node **612.** The summing of limited command **608** and auto retract rate command **604** may be performed using control laws **339** in **Figure 3** in these examples. Limiter **606** may be a control law within control laws **339** that may control the length of telescoping tube **318** in refueling boom **316** in **Figure 3****.**

Limiter **606** may generate a limit that identifies a maximum amount of extension **332** that may be based on elevation **326** in **Figure 3****.** This value of elevation **326** may allow a maximum value for extension **332** throughout a refueling envelope which may gradually reduce to zero as refueling boom **316** changes elevation **326** in **Figure 3** to a value of around -15 degrees. A value of around -15 degrees for elevation **326** may occur at stowed position **333** in **Figure 3****.** In these illustrative examples, auto retract rate command **604** may provide an additional limit to extension **332** of telescoping tube **318** in **Figure 3****.**

Further, in the different advantageous embodiments, limiter **606** may not be overridden with additional force on control stick **342** in **Figure 3****.** In contrast, the limit generated by auto retract rate command **604** may be a hard limit.

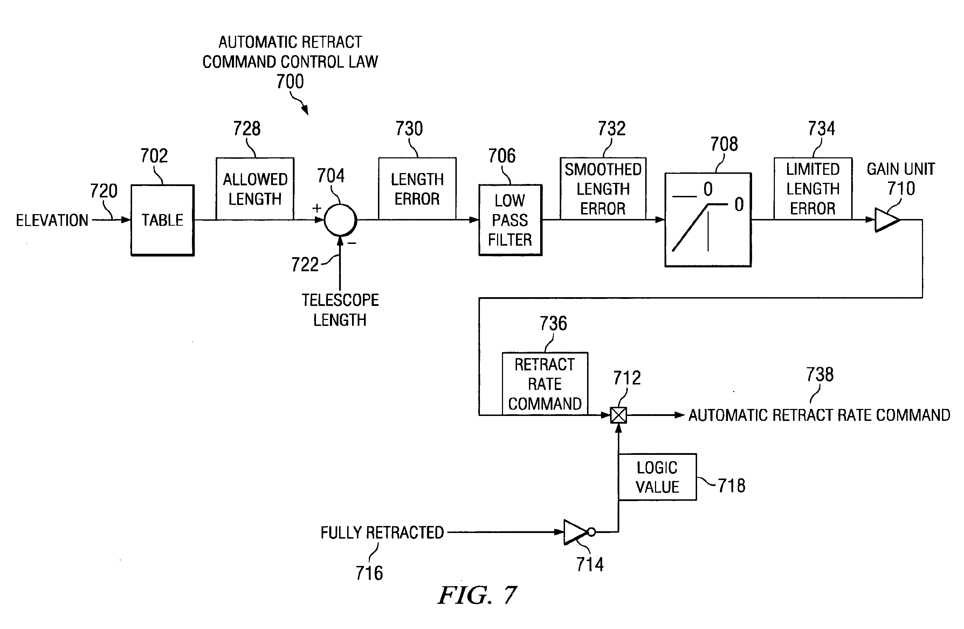

With reference now to **Figure 7****,** a diagram illustrating an automatic retract command control law is depicted in accordance with an advantageous embodiment. In this example, automatic retract command control law **700** is an example of automatic retract command control law **346** in control laws **339** in **Figure 3****.**

In this illustrative example, automatic retract command control law **700** may include table **702,** subtractor node **704,** low pass filter **706,** limiter **708,** gain unit **710,** multiplier **712,** and inverter **714.** These different components are illustrated as logical components and may be implemented as software and/or hardware.

In these illustrative examples, the inputs may be elevation **720,** telescope length **722,** and fully retracted **716.** Elevation **720,** which may be an elevation of the refueling boom, may be input into table **702.** Table **702,** in this example, may generate allowed length **728** based on elevation **720.**

Telescope length **722** may be subtracted from allowed length **728** using subtractor node **704.** In these examples, telescope length **722** may be a current telescope length of the refueling boom. This current telescoping length may be detected using position sensor **337** on refueling boom unit **304** in **Figure 3****.**

The result of subtractor node **704** may be length error **730.** Length error **730** may be sent into low pass filter **706** to generate smoothed length error **732.** Low pass filter **706** may smooth out transients that may be caused by noise in the measurement of the length and/or the elevation. In these examples, the length may be the length at which the telescoping tube for the refueling boom is extended from the fixed tube. Low pass filter **706** may eliminate ratcheting of a rate command sent to an actuator controlling the telescoping tube.

Smoothed length error **732** may be sent to limiter **708.** Limiter **708** may limit smoothed length error **732** to a value of zero or less to form limited length error **734.** In these illustrative examples, a positive value for smoothed length error **732** may indicate that the length of the telescoping tube is less than allowed length **728.** As a result, no additional retraction of the telescoping tube may be needed. Further, any positive values for smoothed length error **732** may be limited to zero.

Limited length error **734** may be sent to gain unit **710.** Gain unit **710** may multiply limited length error **734** by a gain value to create retract rate command **736.** Retract rate command **736** may be sent to multiplier **712.**

Retract rate command **736** may be multiplied by zero if fully retracted **716** is present. Fully retracted **716** may indicate that the telescoping tube has fully retracted. If fully retracted **716** is present, logic value **718** may have a value of zero and may be multiplied by retract rate command **736** using multiplier **712** to generate a value of zero for automatic retract rate command **738.**

If the telescoping tube has not fully retracted, logic value **718** may have a value of one and may be multiplied by retract rate command **736** using multiplier **712.** The product of multiplier **712** may result in retract rate command **736** being used to generate automatic retract rate command **738** for use in automatically retracting the telescoping tube.

With reference now to **Figure 8****,** a diagram of a table is depicted in accordance with an advantageous embodiment. In this example, table **800** is an example of one implementation for table **702** in **Figure 7****.** As illustrated, table **800** may include elevations **802** and allowed lengths **804.** In these examples, elevations **802** may include elevations in one column of table **800** and allowed lengths **804** may include allowed lengths in another column of table **800.** In these examples, entries **806, 808, 810, 812,** and **814** may be present in table **800.**

Each entry may have an elevation in degrees with a corresponding allowed length for the telescoping tube. For example, in entry **806,** the elevation may be minus fifteen degrees with an allowed length of minus three feet. With an elevation of minus eight degrees in entry **808,** an allowed length of minus three feet is present. With an elevation of minus five degrees in entry **810,** a minus one foot allowed length may be present. In entry **812,** a five degree elevation may result in a nineteen foot allowed length. In entry **814,** a 50 degree elevation may result in an allowed length of 19 feet. The entries within elevation column **802** and allowed length column **804** may be linearly interpolated within table **800.**

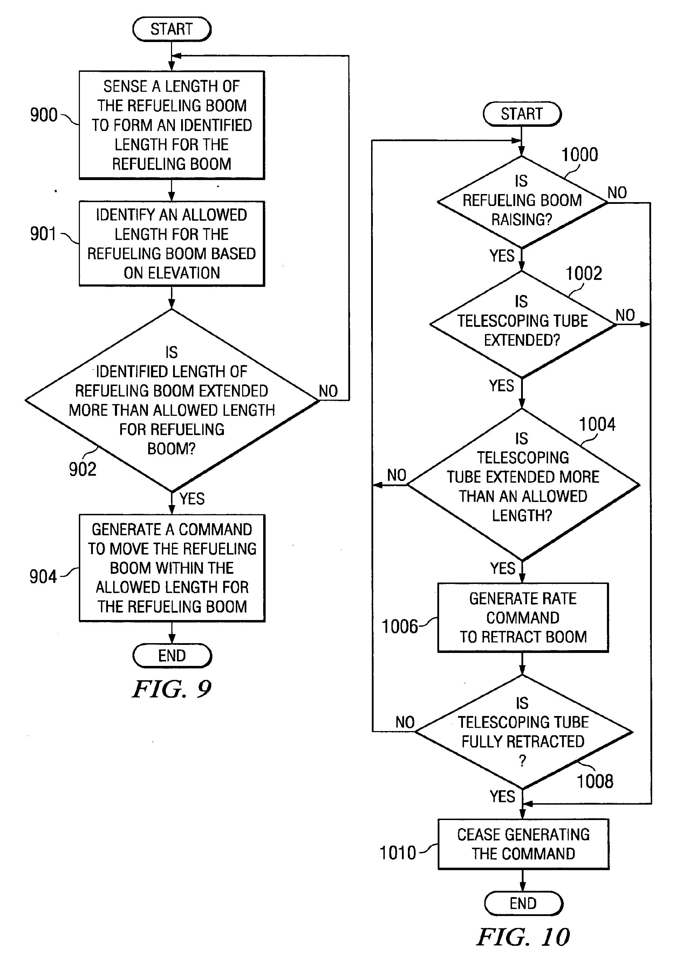

With reference now to **Figure 9****,** a flowchart of a process for controlling a refueling boom is depicted in accordance with an advantageous embodiment. The process illustrated in **Figure 9** may be implemented in a refueling environment such as, for example, without limitation, refueling environment **300** in **Figure 3****.** In particular, the operations depicted in **Figure 9** may be implemented as automatic retract command control law **346** within control laws **339** to control refueling boom **316** in **Figure 3****.**

The process begins by sensing boom length **330** of refueling boom **316** to form an identified length, such as, for example, telescope length **722** in **Figure 7****,** for the refueling boom (operation **900).** In these examples, telescope length **722** may take into account extension **332** of telescoping tube **318** with respect to fixed tube **317** in refueling boom **316.** The process may then identify allowed length **728** for refueling boom **316** based on elevation **720** (operation **901**). A determination may be made as to whether the identified length of refueling boom **316** is extended more than allowed length **728** for the refueling boom (operation **902).**

If refueling boom **316** is extended more than allowed length **728,** a command may be generated to move refueling boom **316** within allowed length **728** for refueling boom **316** (operation **904**), with the process terminating thereafter. If refueling boom **316** is not extended more than allowed length **728,** the process may return to operation **900** as described above.

With reference now to **Figure 10****,** a flowchart of a process for automatically retracting a telescoping tube for a refueling boom is depicted in accordance with an advantageous embodiment. The process illustrated in **Figure 10** may be implemented in refueling environment **300** in **Figure 3****.** In particular, the process may be implemented as a control law in control laws **339.** More specifically, this process may be an example of automatic retract command control law **700** in **Figure 7****.**

The process begins by determining whether refueling boom **316** is raising (operation **1000**). If refueling boom **316** is not raising, the process may then terminate. Otherwise, if refueling boom **316** is raising, a determination may be made as to whether telescoping tube **318** is extended (operation **1002).** If telescoping tube **318** is extended, a determination may then be made as to whether telescoping tube **318** is extended more than allowed length **728** (operation **1004).**

In these examples, allowed length **728** may be based on elevation **720** of refueling boom **316.** Allowed length **728** may be identified using a table such as, for example, without limitation, table **800** in **Figure 8**. Of course, allowed length **728** may be identified using other means. For example, an equation, a database, a model, or some other suitable data structure or mechanism may be used to identify allowed length **728.**

If telescoping tube **318** is not extended more than allowed length **728,** the process may return to operation **1000** as described above. On the other hand, if telescoping tube **318** is extended more than allowed length **728,** a rate command may be generated to retract refueling boom **316** (operation **1006).** In these examples, this rate command may be, for example, without limitation, automatic retract rate command **738** in **Figure 7****.**

After operation **1006,** a determination is made as to whether telescoping tube **318** is fully retracted (operation **1008**). If telescoping tube **318** is fully retracted, the process may cease generating automatic retract rate command **738** (operation **1010**), with the process terminating thereafter. Otherwise, the process may return to operation **1000** as described above. With reference again to operation **1002,** if telescoping tube **318** is not extended, the process also may terminate.

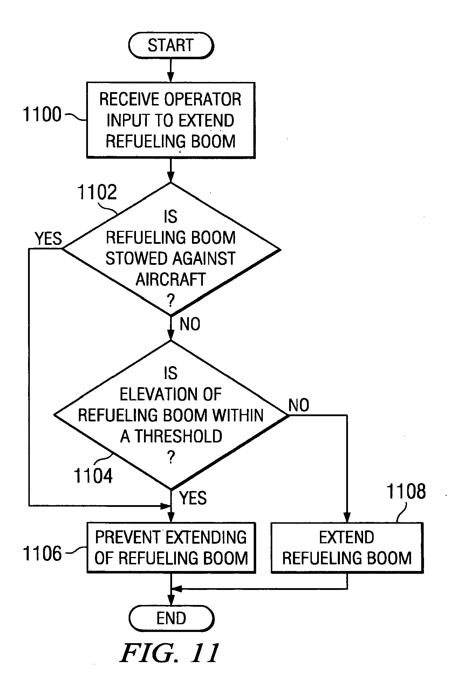

With reference now to **Figure 11****,** a flowchart of a process for controlling the extending of a refueling boom is depicted in accordance with an advantageous embodiment. The process illustrated in **Figure 11** may be implemented in refueling environment **300** in **Figure 3****.** In particular, the process may be implemented as a control law in control laws **339.**

The process begins by receiving operator input **347** to extend refueling boom **316** (operation **1100**). The process may then determine whether refueling boom **316** is stowed against aircraft **100** (operation **1102).** If refueling boom **316** is stowed against aircraft **100,** the process prevents the extending of refueling boom **316** (operation **1106**), with the process terminating thereafter. Otherwise, the process determines whether elevation **326** of refueling boom **316** is within a threshold (operation **1104**). This threshold may be some threshold selected by the operator. If refueling boom **316** has elevation **326** within the threshold, the process continues to operation **1106** as described above, with the process terminating thereafter. Otherwise, the process extends refueling boom **316** (operation **1108**), with the process terminating thereafter.

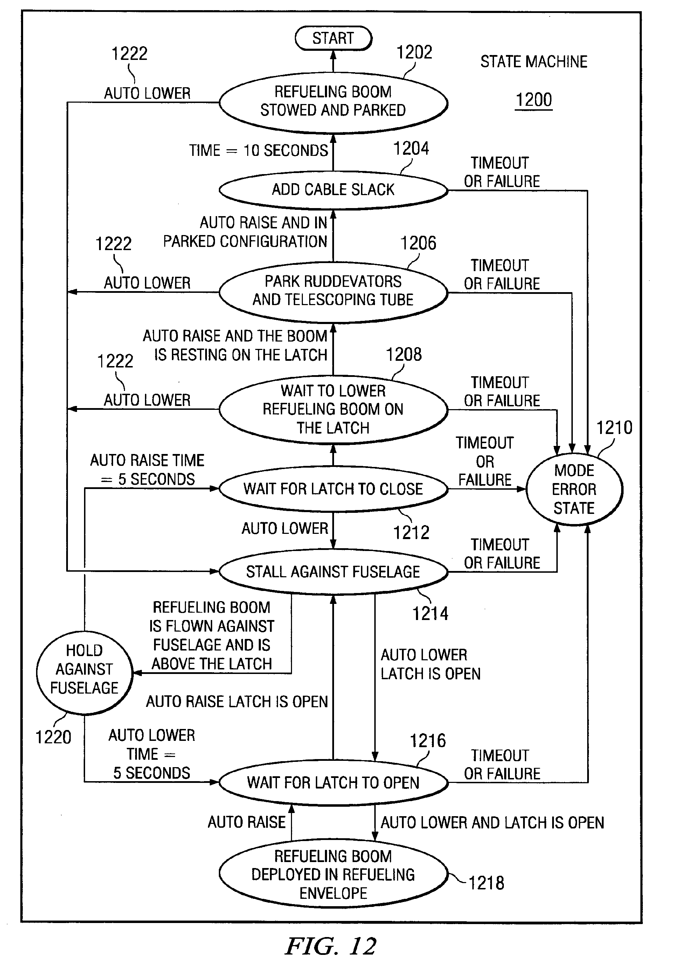

With reference now to **Figure 12****,** a state machine for automatically operating a refueling boom is depicted in accordance with advantageous embodiments. In this example, state machine **1200** is an example of different states that may be implemented in software and/or hardware to move a refueling boom between a stowed position and a deployed position without requiring operator input.

In other words, state machine **1200** may be used to move a refueling boom such as, for example, refueling boom **316** in **Figure 3****,** from stowed position **333** to deployed position **334** and vice versa. State machine **1200** may be implemented as part of a control law within control laws **339** in **Figure 3**. State machine **1200** is an example of a type of process that may be implemented for automatic stowage and deployment control law **348** in **Figure 3**.

This process may perform deploying and/or stowing of refueling boom **316** in an automated sequence in which the different states may rely on elevation **326** of boom angle **343** of refueling boom **316**. In this illustrative example, control laws **339** may maintain azimuth **328** at a control value of around 0 degrees. Elevation **326** of refueling boom **316** may be identified based on sensors **306** in aircraft **301.** In state machine **1200,** the process may initialize or begin in one of the different states in state machine **1200** depending on elevation **326** of refueling boom **316.** State machine **1200** may be initialized whenever deployment or stowing of refueling boom **316** is desired.

In these illustrative examples, the different states may include refueling boom stowed and parked state **1202,** add cable slack state **1204,** park ruddevators and telescoping tube state **1206,** wait to lower refueling boom on the latch state **1208,** mode error state **1210,** wait for latch to close state **1212,** stall against fuselage state **1214,** wait for latch to open state **1216,** refueling boom deployed in refueling envelope state **1218,** and hold against fuselage state **1220.**

In these examples, the process may often initialize at refueling boom stowed and parked state **1202,** or refueling boom deployed in refueling envelope state **1218.** Of course, the process in state machine **1200** may initialize in other states depending on elevation **326** of refueling boom **316.**

In an automatic mode, state machine **1200** may begin in refueling boom stowed and parked state **1202.** This state may be used to stow refueling boom **316** when non-fueling activities are occurring. In this state, ruddevators **329** may be commanded to a preset park position for cruising. Further, cable system **327** used in deploying and/or stowing refueling boom **316** may have a desired amount of cable laid out to rest on latch **331** for refueling boom **316,** while telescoping tube **318** is fully retracted in this state.

Also in this state, actuators **325** may be set to an inactive state, except for a telescope actuator in actuators **325.** The telescope actuator may remain active to allow operator **312** an ability to retract refueling boom **316** if refueling boom **316** were to extend. Further, operator **312** may be unable to extend refueling boom **316** in refueling boom stowed and parked state **1202.**

Add cable slack state **1204** may be used to set a desired amount of cable slack to unload the cable in cable system **327.** This state may last only for around 10 seconds before returning to refueling boom stowed and parked state **1202.** Park ruddevators and telescoping tube state **1206** may be used to place ruddevators **329** in a park position and to ensure that telescoping tube **318** is fully retracted.

Wait to lower refueling boom on the latch state **1208** may be used to lower refueling boom **316** from being up against fuselage **303** to sitting on latch **331** to prepare for parking refueling boom **316** in stowed position **333.** A command within commands **314** may be generated to move refueling boom **316** down onto latch **331** in wait to lower refueling boom on the latch state **1208.**

Mode error state **1210** may be used to alert operator **312** that an error has occurred during a process of automatically deploying and/or stowing refueling boom **316.** In these depicted examples, two types of errors may occur during this process. These errors may be, for example, without limitation, a timeout and/or a failure. A timeout may occur when the process stays at a particular state for a period of time that is longer than a threshold or a selected period of time for a particular state.

For example, add cable slack state **1204,** park ruddevators and telescoping tube state **1206,** wait to lower refueling boom on the latch state **1208,** wait for latch to close state **1212,** and wait for latch to open state **1216** may have a timeout associated with these states to determine the time period that is appropriate for the process to remain in one of these states. If this time period is exceeded, the process may shift from these states to mode error state **1210.** When mode error state **1210** occurs, an operator may switch to manual mode **351** and may manually control the deploying and/or stowing of refueling boom **316.**

Wait for latch to close state **1212** may be used to close latch **331** while refueling boom **316** is being held up against fuselage **303.** Latch enabled sensor **345** may indicate when refueling boom **316** is in stowed position **333** and when latch **331** may be operated safely. Stall against fuselage state **1214** may be used to move refueling boom **316** up against fuselage **303.** For deployment of refueling boom **316,** refueling boom **316** may be moved off latch **331** to prepare to open latch **331.** For stowing operations, this state may move refueling boom **316** against fuselage **303** to prepare to close latch **331.**

Wait for latch to open state **1216** may be used to open latch **331,** while refueling boom **316** is being held up against fuselage **303.** Latch enabled sensor **345** may indicate when refueling boom **316** is against fuselage **303** and latch **331** can be safely operated.

Refueling boom deployed in refueling envelope state **1218** may be used to operate refueling boom **316** for refueling. No commands may occur in this state. Hold against fuselage state **1220** may be a state used to hold refueling boom **316** against fuselage **303** to operate latch **331.**

In operation, if the process initializes in refueling boom stowed and parked state **1202,** park ruddevators and telescoping tube state **1206,** or wait to lower refueling boom on the latch state **1208,** auto lower command **1222** may shift from these states to stall against fuselage state **1214.**

From this state, the process may shift to hold against fuselage state **1220** for around five seconds. The process may be then shifted to wait for latch to open state **1216.** When the refueling boom is lowered and latch **331** is opened, the process may then shift to refueling boom deployed in refueling envelope state **1218,** and refueling boom **316** may begin to automatically lower. In this state, refueling boom **316** may be fully deployed and ready for performing refueling operations.

From this state, refueling boom **316** may be stowed when a command within commands **314** is received to automatically stow refueling boom **316.** This command may result in raising refueling boom **316** and the process shifting to wait for latch to open state **1216.** From this state, refueling boom **316** may be automatically raised with latch **331** being opened, and the process may then shift to stall against fuselage state **1214.**

Refueling boom **316** may then be flown against fuselage **303** and may be above latch **331** with the process then shifting to hold against fuselage state **1220.** The process then may shift to wait for latch to close state **1212.** Refueling boom **316** may be automatically raised and latch **331** closed, with the process then shifting to wait to lower refueling boom on the latch state **1208.**

The process may then automatically raise refueling boom **316,** and refueling boom **316** may rest on latch **331,** with the process shifting to park ruddevators and telescoping tube state **1206.**

The process may then raise refueling boom **316** and place ruddevators **329** in a parked reconfiguration, with the process then shifting to add cable slack state **1204.** Thereafter, after around 10 seconds, the process may proceed to refueling boom stowed and parked state **1202.** In this state, refueling boom **316** may be in stowed position **333.**

Thus, state machine **1200** may provide a capability to automatically deploy and/or stow refueling boom **316.** Further, the movement of refueling boom **316** between stowed position **333** and deployed position **334** may occur automatically in response to an operator input or some other input from another device.

The flowcharts and block diagrams in the different depicted embodiments illustrate the architecture, functionality, and operation of some possible implementations of apparatus, methods, and computer program products. In this regard, each block in the flowchart or block diagrams may represent a module, segment, or portion of computer usable or readable program code, which comprises one or more executable instructions for implementing the specified function or functions.

In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved.

Thus, the different advantageous embodiments may control a refueling boom. In controlling a refueling boom, a length of the refueling boom may be sensed to form an identified length for the refueling boom. If the identified length of the refueling boom is extended more than an allowed length for the refueling boom, a command such as, for example, automatic retract rate command **738** in **Figure 7****,** may be generated to move the refueling boom within the allowed length if the refueling boom is extended more than the allowed length.

In these examples, this length may be an extension of the telescoping tube from the fixed tube. Further, the different advantageous embodiments also may automatically move the refueling boom between a stowed position and a deployed position without requiring operator input. In the different advantageous embodiments, a plurality of states in a state machine such as, for example, state machine **1200** in **Figure 12****,** may be implemented in automatic stowage and deployment control law **348** in **Figure 3** to provide for this type of automatic deployment and/or stowage in movement.

With the different advantageous embodiments, additional safety in avoiding a portion of the refueling boom from entering and/or touching an exhaust trail of an auxiliary power unit may be avoided. Further, the different advantageous embodiments also may reduce a workload of an operator by providing for automatic stowing and/or deployment of a refueling boom.

The different advantageous embodiments can take the form of an entirely hardware embodiment, an entirely software embodiment, or an embodiment containing both hardware and software elements. Some embodiments are implemented in software, which includes, but is not limited to, forms such as, for example, firmware, resident software, and microcode.

Furthermore, the different embodiments can take the form of a computer program product accessible from a computer usable or computer readable medium providing program code for use by, or in connection with, a computer or any device or system that executes instructions. For the purposes of this disclosure, a computer usable or computer readable medium can generally be any tangible apparatus that can contain, store, communicate, propagate, or transport the program for use by, or in connection with, the instruction execution system, apparatus, or device.

The computer usable or computer readable medium can be, for example, without limitation, an electronic, magnetic, optical, electromagnetic, infrared, or semiconductor system, or a propagation medium. Non- limiting examples of a computer readable medium include a semiconductor or solid state memory, magnetic tape, a removable computer diskette, a random access memory (RAM), a read-only memory (ROM), a rigid magnetic disk, and an optical disk. Optical disks may include compact disk - read only memory (CD-ROM), compact disk - read/write (CD-R/W), and DVD.

Further, a computer usable or computer readable medium may contain or store a computer readable or usable program code such that when the computer readable or usable program code is executed on a computer, the execution of this computer readable or usable program code causes the computer to transmit another computer readable or usable program code over a communications link. This communications link may use a medium that is, for example, without limitation, physical or wireless.

A data processing system suitable for storing and/or executing computer readable or computer usable program code will include one or more processors coupled directly or indirectly to memory elements through a communications fabric, such as a system bus. The memory elements may include local memory employed during actual execution of the program code, bulk storage, and cache memories which provide temporary storage of at least some computer readable or computer usable program code to reduce the number of times code may be retrieved from bulk storage during execution of the code.

Input/output or I/O devices can be coupled to the system either directly or through intervening I/O controllers. These devices may include, for example, without limitation, keyboards, touch screen displays, and pointing devices. Different communications adapters may also be coupled to the system to enable the data processing system to become coupled to other data processing systems or remote printers or storage devices through intervening private or public networks. Non-limiting examples are modems and network adapters and are just a few of the currently available types of communications adapters.

The description of the different advantageous embodiments has been presented for purposes of illustration and description, and it is not intended to be exhaustive or limited to the embodiments in the form disclosed. Many modifications and variations will be apparent to those of ordinary skill in the art. Further, different advantageous embodiments may provide different advantages as compared to other advantageous embodiments.

The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for controlling a refueling boom, the method comprising:
sensing (900) a length (330) of the refueling boom (316) to form an identified length (722) for the refueling boom (316);
and **characterised by**
determining (902) whether the identified length (722) of the refueling boom is extended more than an allowed length (728) for the refueling boom; and
generating (904) a command (315) to move the refueling boom (316) within the allowed length (728) for the refueling boom (316) if the refueling boom (316) is extended more than the allowed length (728).

2. The method of claim 1 further comprising:
preventing (1106) extending of the refueling boom (316) when the refueling boom (316) is stowed against an aircraft (100).

3. The method of claim 1, wherein the command (315) to move the refueling boom (316) within the allowed length (728) is an automatic retract rate command (738).

4. The method of claim 1 further comprising:
identifying (901) the allowed length (728) from an elevation (326) of the refueling boom (316).

5. The method of claim 1 further comprising:
ceasing (1010) generating of the command (315) when the refueling boom (316) is fully retracted.

6. The method of claim 1, wherein the determining (902) step comprises:
determining (902) whether the identified length (722) of the refueling boom (316) is extended more than the allowed length (728) for the refueling boom (316) using a table (800).

7. The method of claim 6, wherein the table (800) comprises a number of elevations (802) and a number of associated allowed lengths (804).

8. The method of claim 7 further comprising:
preventing (1106) extending of the refueling boom (316) when an elevation (326) of the refueling boom (316) is within a threshold.

9. The method of claim 1 further comprising:
moving the refueling boom (316) between a stowed position (333) and a deployed position (334) without requiring operator input (347).

10. The method of claim 9, wherein the moving step comprises:
moving the refueling boom (316) between the stowed position (333) and the deployed position (334) without requiring the operator input (347) using a state machine (1200) having a plurality of states (1202-1218) to control movement of the refueling boom (316).

11. An apparatus comprising a data processing system (200) arranged to execute a process (338),
wherein the process comprises receiving a length (330) of a refueling boom (316) to form an identified length (722) of the refueling boom (316), determining whether the identified length (722) of the refueling boom (316) is extended more than an allowed length (728) for the refueling boom (316), and generating a command (315) to move the refueling boom (316) within the allowed length (728) for the refueling boom (316) if the refueling boom (316) is extended more than the allowed length.

12. The apparatus of claim 11, wherein the process (338) comprises:
automatically moving the refueling boom (316) between a deployed position (334) and a stowed position (333) without operator input (347).

13. The apparatus of claim 12, wherein the process comprises:
moving the refueling boom (316) between the stowed position (333) and the deployed position (334) without requiring the operator input (347) using a state machine (1200) having a plurality of states (1202-1218) based on an elevation (326) of the refueling boom (316).

14. The apparatus of claim 11 further comprising:
a sensor (337) arranged to sense the length (330) of the refueling boom (316) to form the identified length (722) of the refueling boom (316).

15. A computer program product (220) for controlling a refueling boom (316), the computer program product (220) comprising:
program code (216), stored on a computer recordable storage medium (219), for sensing (900) a length (33) of the refueling boom (316) to form an identified length (722) for the refueling boom (316);
program code (216), stored on a computer recordable storage medium (219), for determining (902) whether the identified length (722) of the refueling boom (316) is extended more than an allowed length (728) for the refueling boom (316); and
program code (216), stored on a computer recordable storage medium (219), for generating (904) a command (315) to move the refueling boom (316) within the allowed length (728) for the refueling boom (316) if the refueling boom (316) is extended more than the allowed length (728).

## Patentansprüche

1. Verfahren zur Steuerung eines Betankungsauslegers, wobei das Verfahren umfasst:
Erfassen (900) einer Länge (330) des Betankungsauslegers (316),
um eine erfasste Länge (722) für den Betankungsausleger (316) zu bilden;
und **gekennzeichnet ist durch**:
Bestimmen (902), ob die erfasste Länge (722) des Betankungsauslegers über eine für den Betankungsausleger zulässige Länge (728) hinausgeht; und
Erzeugen (904) einer Anweisung (315), um den Betankungsausleger (316) in die für den Betankungsausleger (316) zulässige Länge (728) zu bringen, wenn der Betankungsausleger (316) über die zulässige Länge (728) hinaus ausgefahren ist.

2. Verfahren nach Anspruch 1, das ferner umfasst:
das Ausfahren des Betankungsauslegers (316) zu verhindern (1106), wenn der Betankungsausleger (316) an einem Luftfahrzeug (100) verstaut ist.

3. Verfahren nach Anspruch 1, worin die Anweisung (315), den Betankungsausleger (316) auf die zulässige Länge (728) zu bringen, eine automatische Einziehgeschwindigkeitsanweisung ist.

4. Verfahren nach Anspruch 1, das ferner umfasst:
Identifizieren (901) der zulässigen Länge (728) aus einem Höhenwinkel (326) des Betankungsauslegers (316).

5. Verfahren nach Anspruch 1, das ferner umfasst:
Beenden (1010) der Erzeugung der Anweisung (315), wenn der Betankungsausleger (316) vollständig eingezogen ist.

6. Verfahren nach Anspruch 1, worin der Schritt des Bestimmens (902) umfasst:
Bestimmen (902), ob die erfasste Länge (722) des Betankungsauslegers (316) über eine für den Betankungsausleger (316) zulässige Länge (728) hinausgeht, unter Verwendung einer Tabelle (800).

7. Verfahren nach Anspruch 6, worin die Tabelle (800) eine Anzahl von Höhenwinkeln (802) und eine Anzahl von zugehörigen zulässigen Längen (804) umfasst.

8. Verfahren nach Anspruch 7, das ferner umfasst:
Verhindern (1106) des Ausfahrens des Betankungsauslegers (316), wenn ein Höhenwinkel (326) des Betankungsauslegers (316) innerhalb eines Schwellwerts liegt.

9. Verfahren nach Anspruch 1, das ferner umfasst:
Bewegen des Betankungsauslegers (316) zwischen einer verstauten Position (333) und einer ausgefahrenen Position (334), ohne dass Benutzereingaben (347) erforderlich sind.

10. Verfahren nach Anspruch 9, worin der Bewegungsschritt umfasst:
Bewegen des Betankungsauslegers (316) zwischen der verstauten Position (333) und der ausgefahrenen Position (334), ohne dass Benutzereingaben (347) erforderlich sind, unter Verwendung eines Zustandsautomaten (1200), der mehrere Zustände (1202-1218) zur Steuerung einer Bewegung des Betankungsauslegers (316) aufweist.

11. Vorrichtung, die ein Datenverarbeitungssystem (200) umfasst, das zur Durchführung eines Verfahrens (338) ausgebildet ist, wobei das Verfahren umfasst:
Erfassen einer Länge (330) eines Betankungsauslegers (316), um eine erfasste Länge (722) des Betankungsauslegers (316) zu bilden, Bestimmen, ob die erfasste Länge (722) des Betankungsauslegers (316) über eine für den Betankungsausleger (316) zulässige Länge (728) hinausgeht; und Erzeugen einer Anweisung (315),
um den Betankungsausleger (316) in die für den Betankungsausleger (316) zulässige Länge (728) zu bringen, wenn der Betankungsausleger (316) weiter als die für den Betankungsausleger zulässige Länge (728) ausgefahren ist.

12. Vorrichtung nach Anspruch 11, wobei das Verfahren (338) umfasst:
automatisches Bewegen des Betankungsauslegers (316) zwischen einer ausgefahrenen Position (334) und einer verstauten Position (333) ohne Benutzereingabe (347).

13. Vorrichtung nach Anspruch 12, wobei das Verfahren umfasst:
Bewegen des Betankungsauslegers (316) zwischen der verstauten Position (333) und der ausgefahrenen Position (334) ohne Erfordernis einer Benutzereingabe (347) unter Verwendung eines Zustandsautomaten (1200), der mehrere Zustände (1202-1218) aufweist, die auf einem Höhenwinkel (326) des Betankungsauslegers (316) basieren.

14. Vorrichtung nach Anspruch 11, die ferner aufweist:
einen Sensor (337), der ausgebildet ist, die Länge (330) des Betankungsauslegers (316) zu erfassen, um die erfasste Länge (722) des Betankungsauslegers (316) zu bilden.

15. Computerprogrammprodukt (220) zum Steuern eines Betankungsauslegers (316), wobei das Computerprogrammprodukt (220) aufweist:
Programmcode (216), der auf einem mit einem Computer beschreibbaren Speichermedium (219) gespeichert ist, zum Erfassen (900) einer Länge (330) des Betankungsauslegers (316), um eine erfasste Länge (722) für den Betankungsausleger (316) zu bilden;
Programmcode (216), der auf einem mit einem Computer beschreibbaren Speichermedium (219) gespeichert ist, zum Bestimmen (902), ob die erfasste Länge (722) des Betankungsauslegers (316) über eine für den Betankungsausleger (316) zulässige Länge (728) hinausgeht; und
Programmcode (216), der auf einem mit einem Computer beschreibbaren Speichermedium (219) gespeichert ist, zum Erzeugen (904) einer Anweisung (315), um den Betankungsausleger (316) in die für den Betankungsausleger (316) zulässige Länge (728) zu bringen, wenn der Betankungsausleger (316) über die zulässige Länge (728) hinaus ausgefahren ist.

## Revendications

1. Procédé pour commander une perche de ravitaillement, le procédé comprenant :
la détection (900) d'une longueur (330) de la perche de ravitaillement (316) pour former une longueur identifiée (722) pour la perche de ravitaillement (316) ;
et **caractérisé par**
la détermination (902) si la longueur identifiée (722) de la perche de ravitaillement est supérieure à une longueur autorisée (728) pour la perche de ravitaillement ; et
la génération (904) d'une commande (315) pour déplacer la perche de ravitaillement (316) dans les limites de la longueur autorisée (728) pour la perche de ravitaillement (316) si la perche de ravitaillement (316) est étendue au-delà de la longueur autorisée (728).

2. Procédé selon la revendication 1, comprenant en outre :
l'interdiction (1106) de l'extension de la perche de ravitaillement (316) lorsque la perche de ravitaillement (316) est rangée contre un avion (100).

3. Procédé selon la revendication 1, dans lequel la commande (315) pour déplacer la perche de ravitaillement (316) dans les limites de la longueur autorisée (728) est une commande de taux de rétraction automatique (738).

4. Procédé selon la revendication 1, comprenant en outre :
l'identification (901) de la longueur autorisée (728) à partir d'une élévation (326) de la perche de ravitaillement (316).

5. Procédé selon la revendication 1, comprenant en outre :
l'arrêt (1010) de la génération de la commande (315) lorsque la perche de ravitaillement (316) est totalement rétractée.

6. Procédé selon la revendication 1, dans lequel l'étape de détermination (902) comprend :
la détermination (902) si la longueur identifiée (722) de la perche de ravitaillement (316) est supérieure à la longueur autorisée (728) pour la perche de ravitaillement (316) en utilisant une table (800).

7. Procédé selon la revendication 6, dans lequel la table (800) comprend un certain nombre d'élévations (802) et un certain nombre de longueurs autorisées (804) associées.

8. Procédé selon la revendication 7, comprenant en outre :
l'interdiction (1106) de l'extension de la perche de ravitaillement (316) lorsqu'une élévation (326) de la perche de ravitaillement (316) est dans les limites d'un seuil.

9. Procédé selon la revendication 1, comprenant en outre :
le déplacement de la perche de ravitaillement (316) entre une position rangée (333) et une position déployée (334) sans nécessiter une entrée d'opérateur (347).

10. Procédé selon la revendication 9, dans lequel l'étape de déplacement comprend :
le déplacement de la perche de ravitaillement (316) entre la position rangée (333) et la position déployée (334) sans nécessiter l'entrée d'opérateur (347) en utilisant une machine à états (1200) ayant une pluralité d'états (1202 à 1218) pour commander le déplacement de la perche de ravitaillement (316).

11. Appareil comprenant un système de traitement de données (200) agencé pour exécuter un processus (338),
dans lequel le processus comprend la réception d'une longueur (330) d'une perche de ravitaillement (316) pour former une longueur identifiée (722) de la perche de ravitaillement (316), la détermination si la longueur identifiée (722) de la perche de ravitaillement (316) est supérieure à une longueur autorisée (728) pour la perche de ravitaillement (316), et la génération d'une commande (315) pour déplacer la perche de ravitaillement (316) dans les limites de la longueur autorisée (728) pour la perche de ravitaillement (316) si la perche de ravitaillement (316) est étendue au-delà de la longueur autorisée.

12. Appareil selon la revendication 11, dans lequel le processus (338) comprend :
le déplacement automatique de la perche de ravitaillement (316) entre une position déployée (334) et une position rangée (333) sans une entrée d'opérateur (347).

13. Appareil selon la revendication 12, dans lequel le processus comprend :
le déplacement de la perche de ravitaillement (316) entre la position rangée (333) et la position déployée (334) sans nécessiter l'entrée d'opérateur (347) en utilisant une machine à états (1200) ayant une pluralité d'états (1202 à 1218) sur la base d'une élévation (326) de la perche de ravitaillement (316).

14. Appareil selon la revendication 11, comprenant en outre :
un capteur (337) agencé pour détecter la longueur (330) de la perche de ravitaillement (316) pour former la longueur identifiée (722) de la perche de ravitaillement (316).

15. Produit-programme d'ordinateur (220) pour commander une perche de ravitaillement (316), le produit-programme d'ordinateur (220) comprenant :
un code de programme (216), mémorisé sur un support de mémorisation enregistrable d'ordinateur (219), pour détecter (900) une longueur (330) de la perche de ravitaillement (316) pour former une longueur identifiée (722) pour la perche de ravitaillement (316) ;
un code de programme (216), mémorisé sur un support de mémorisation enregistrable d'ordinateur (219), pour déterminer (902) si la longueur identifiée (722) de la perche de ravitaillement (316) est supérieure à une longueur autorisée (728) pour la perche de ravitaillement (316) ; et
un code de programme (216), mémorisé sur un support de mémorisation enregistrable d'ordinateur (219), pour générer (904) une commande (315) pour déplacer la perche de ravitaillement (316) dans les limites de la longueur autorisée (728) pour la perche de ravitaillement (316) si la perche de ravitaillement (316) est étendue au-delà de la longueur autorisée (728).
